# FASCICULE DE BREVET EUROPEEN

(11) **EP 3 526 483 B1**
(45) Date de publication et mention de la délivrance du brevet: **14.12.2022**
(21) Numéro de dépôt: 17786990.6
(22) Date de dépôt: 10.10.2017
(51) Int. Cl.: F16D 51/12, F16D 51/18, F16D 51/20, F16D 51/22, F16D 65/04, F16D 65/22

(54) **FREIN A TAMBOUR INTEGRANT UN SEGMENT COMPORTANT UN LEVIER D'ACTIONNEMENT DE FREIN DE STATIONNEMENT AYANT UNE PORTION DE POUSSEE CENTREE**
MITTIGER PARKTROMMELBREMSHEBEL
DRUM BRAKE WITH CENTERED PARK BRAKE LEVER

(30) Priorité: 12.10.2016 FR 1659853
(43) Date de publication de la demande: 21.08.2019
(73) Titulaire: Hitachi Astemo France, 93700 Drancy (FR)
(72) Inventeur: BOURLON, Philippe, 77230 Dammartin En Goele (FR)
(74) Mandataire: Brevalex
(86) Numéro de dépôt international: PCT/FR2017/052770
(87) Numéro de publication internationale: WO 2018/069626

(56) Documents cités:
- FR-A1- 2 697 600
- US-A- 4 101 010
- US-A- 5 630 486
- US-A1- 2005 173 208

## Description

### DOMAINE TECHNIQUE

La présente invention se rapporte à un frein à tambour intégrant un levier de frein de stationnement.

### ÉTAT DE LA TECHNIQUE ANTÉRIEURE

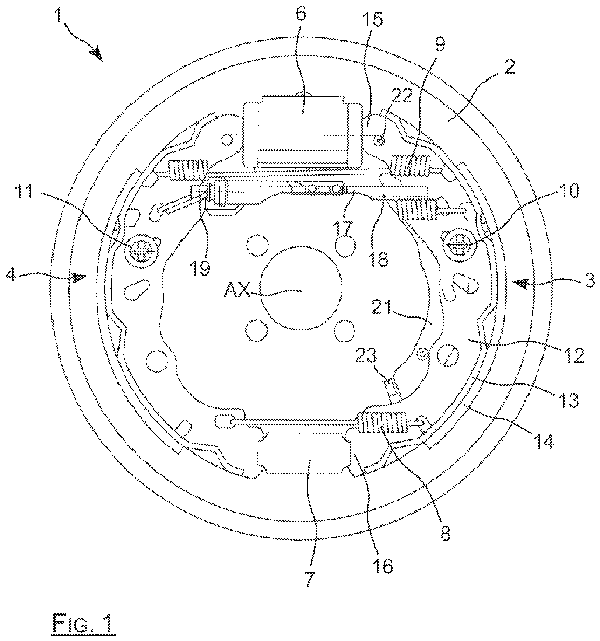

Comme visible sur la figure 1, un frein à tambour comporte un plateau 2 fixe équipé d'un premier et d'un second segment en arc de cercles 3 et 4 montés symétriquement de part et d'autre d'un cylindre de roue 6 et d'une butée 7 que porte ce plateau et sur lesquels les extrémités de ces segments 3 et 4 sont en appui.

Ces deux segments 3, 4 sont mobiles radialement pour pouvoir être pressés contre la face interne cylindrique d'un tambour non représenté de façon à générer un couple de freinage. Ils sont rappelés l'un vers l'autre par deux ressorts de rappel 8 et 9, et plaqués contre le plateau 2 chacun par un ressort 10, 11.

Le cylindre de roue 6 qui s'étend selon une direction orthoradiale par rapport à l'axe AX de révolution du plateau correspond à l'actionneur du frein de service. Il comprend une chambre hydraulique cylindrique fermée à ses extrémités par deux pistons qui s'écartent l'un de l'autre lorsque la pression hydraulique augmente.

Le premier segment 3 comporte une âme 12 en tôle plane en forme de portion de couronne circulaire, au bord externe de laquelle est fixée une semelle 13 en tôle cintrée cylindriquement qui porte une garniture de freinage 14. Cette âme 12 comporte une première extrémité 15 qui est en appui sur un piston du cylindre de roue 6 et une seconde extrémité 16, opposée à la première, qui est en appui sur la butée 7.

Le second segment 4 est globalement symétrique du premier, il comporte lui aussi une âme à laquelle est fixée une semelle portant une garniture, et il est en appui sur l'autre piston du cylindre de roue 6 et sur la butée 7 par les extrémités de son âme. Les âmes des deux segments 3 et 4 s'étendent selon un même plan médian parallèle au plateau 2, situé à mi-hauteur des semelles par rapport à ce plateau 2.

Complémentairement, une biellette de rattrapage d'usure 17 s'étend le long du cylindre de roue 6 en ayant une première extrémité 18 en appui sur l'âme du premier segment 3 et une seconde extrémité 19 en appui sur l'âme du second segment 4 lorsque le frein est au repos.

Cette biellette 17 intègre un mécanisme non détaillé grâce auquel sa longueur augmente au fil de l'usure des garnitures, pour que la course des pistons du cylindre de roue, et par là même la course de la commande du frein de service, reste inchangée au cours de la vie du frein.

L'âme 12 du premier segment 3 porte un levier 21 actionné par une commande de frein de parc, pour écarter les segments 3 et 4 sur activation de cette commande de frein de parc.

Ce levier 21 qui longe l'âme 12 du premier segment 3 comporte une première extrémité liée en rotation par une liaison pivot fixe 22 à l'âme du premier segment 3 dans la région de la première extrémité de cette âme 12, et une seconde extrémité équipée d'une attache 23 destiné à recevoir une tête de câble. Ce levier 21 est en appui au voisinage de sa première extrémité sur la première extrémité 18 de la biellette 17.

Lorsque le frein de parc est actionné, le câble tire sur la seconde extrémité du levier 21 qui s'écarte alors de la semelle 13 du premier segment 3, et vient en appui sur la biellette 17 pour écarter le premier et le second segment 3, 4 afin de les presser contre le tambour.

Mais lorsque les efforts exercés par le levier 21 sont trop élevés, le premier segment 3 bascule en se soulevant de ses appuis sur le plateau 2 dans la région de la première extrémité de son âme 12. Ceci réduit l'intensité de freinage par diminution de la surface de contact des garnitures avec le tambour, et peut conduire au déboîtement complet du premier segment 3 qui n'est alors plus en appui sur le piston du cylindre de roue et devient alors totalement inopérant. Le document FR2697600 A1 décrit un frein de tambour au sens de préambule de la revendication 1, avec un pivot, et sans portion déportée pour être située au niveau du plan médian.

Le but de l'invention est de remédier à cet inconvénient.

### EXPOSÉ DE L'INVENTION

A cet effet, l'invention a pour objet un frein à tambour comprenant un cylindre de roue et une butée portant conjointement un premier et un second segment ayant chacun une âme comportant chacun une première et une seconde extrémité en appui respectivement sur le cylindre de roue et sur la butée, ces âmes s'étendant selon un même plan médian, le premier segment portant un levier de frein de parc s'étendant le long de son âme et comprenant une première extrémité liée en rotation à la première extrémité de cette âme ainsi qu'une seconde extrémité pourvue d'une attache d'actionnement, une biellette s'étendant entre le premier et le second segment, le levier étant en appui sur une première extrémité de cette biellette, cette biellette comprenant une seconde extrémité en appui sur le second segment, caractérisé en ce que le levier comporte une portion de poussée sur la première extrémité de la biellette qui est déportée pour être située au niveau du plan médian.

Avec cet agencement, les efforts sont exercés par le levier sur la biellette dans le plan médian, pour que les efforts de réaction du levier sur l'âme du segment soient eux aussi exercés sensiblement dans un plan médian afin de ne pas faire basculer ce segment. Ceci permet d'accroître significativement le niveau d'effort de freinage admissible par le frein sans risque de basculement du segment.

L'invention concerne également un frein ainsi défini, dans lequel le levier est fabriqué en tôle découpée et emboutie et comporte un soyage pour déporter sa portion de poussée.

L'invention concerne également un frein ainsi défini, dans lequel la portion de poussée dépasse de l'âme y compris lorsque le levier est inactif, pour que le premier segment soit en appui sur la première extrémité de la biellette principalement par l'intermédiaire du levier y compris lorsque ce levier est inactif.

L'invention concerne également un frein ainsi défini, dans lequel l'attache d'actionnement est une attache de tête de câble qui est décalée par rapport au plan médian.

L'invention concerne également un frein ainsi défini, dans lequel le levier est fabriqué en tôle emboutie et dans lequel l'attache de tête de câble est constituée par un repli de l'extrémité du levier.

### BRÈVE DESCRIPTION DES DESSINS

La figure 1 déjà décrite est une vue de dessus d'un frein à tambour de l'Etat de la technique ;
La figure 2 est une vue en perspective d'un frein à tambour selon l'invention ;
La figure 3 est une vue latérale du levier du frein à tambour selon l'invention représenté seul ;
La figure 4 est une vue de face du levier du frein à tambour de la figure 3 selon l'invention représenté seul ;
La figure 5 est une vue latérale du levier du frein à tambour selon l'invention représenté avec le segment qui le porte ;
La figure 6 est une vue de face du levier du frein à tambour de la figure 5 selon l'invention représenté avec le segment qui le porte.

### EXPOSÉ DÉTAILLÉ DE MODES DE RÉALISATION PARTICULIERS

L'idée à la base de l'invention est de modifier le levier du frein de parc pour qu'il soit en appui sur la biellette au niveau d'une portion de poussée située dans le plan médian du frein.

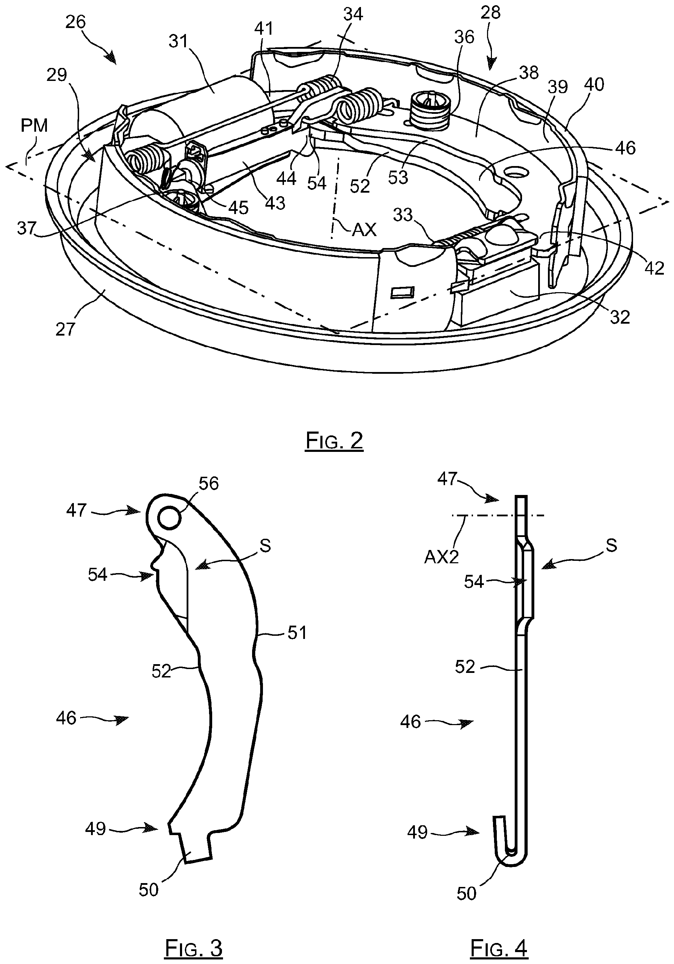

Comme visible sur la figure 2, le frein à tambour 26 selon l'invention comporte un plateau 27 équipé d'un premier et d'un second segment en arc de cercles 28 et 29 montés de part et d'autre d'un cylindre de roue 31 et d'une butée 32 rigidement solidaires de ce plateau. Ces segments 28 et 29 qui sont mobiles radialement pour être pressés contre la face interne d'un tambour afin de générer le freinage, sont rappelés l'un vers l'autre par deux ressorts 33 et 34, et plaqués contre le plateau 27 chacun par un ressort correspondant 36, 37.

Le cylindre de roue 31, orienté orthoradialement par rapport à l'axe de révolution AX du plateau 27, comprend une chambre hydraulique cylindrique fermée par deux pistons qui s'écartent ainsi l'un de l'autre lorsque la pression hydraulique augmente.

Le premier segment 28 comporte une âme 38 en tôle plane en forme de portion de couronne circulaire, au bord externe de laquelle est fixée une semelle 39 en tôle cintrée portant une garniture 40. Cette âme 38 comporte une première extrémité 41 qui est en appui sur un piston du cylindre de roue 31 et une seconde extrémité 42, opposée à la première, qui est en appui sur la butée 32. Le second segment 29, globalement symétrique du premier, est en appui sur l'autre piston du cylindre de roue 31 et sur la butée 32, par les extrémités de son âme.

Les âmes des deux segments 28 et 29 s'étendent selon un même plan médian PM parallèle au plateau 27, situé à mi-hauteur des semelles par rapport à ce plateau 27. Une biellette de rattrapage d'usure 43 s'étend le long du cylindre de roue 31, sensiblement dans le plan PM, en ayant une première extrémité 44 en appui sur l'âme 38 du premier segment 28 et une seconde extrémité 45 en appui sur l'âme du second segment 29 lorsque le frein est au repos.

Cette biellette 43 comporte un mécanisme non détaillé par lequel sa longueur augmente au fil de l'usure des garnitures, pour que la course des pistons du cylindre de roue et par là même de la commande du frein de service reste inchangée.

L'âme 38 du premier segment 28 porte un levier 46 actionné par une commande de frein de parc, pour écarter les segments sur activation de cette commande de frein de parc.

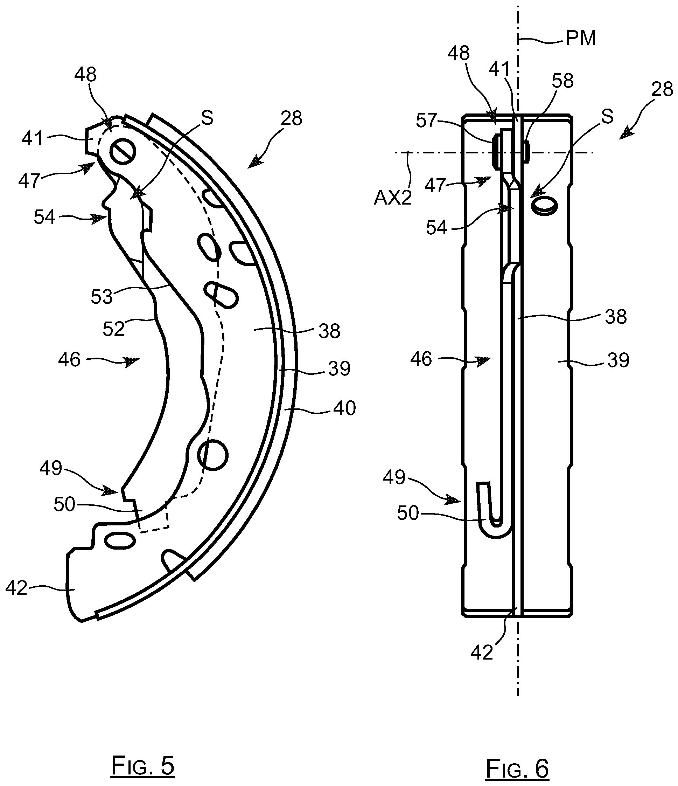

Ce levier 46 qui est fabriqué tout comme l'âme 38 à partir de tôle épaisse plane, s'étend le long de la face de cette âme 38 qui est en vis-à-vis du corps du plateau 27. Il comporte une première extrémité 47 articulée sur la première extrémité 41 de l'âme 38 par une liaison pivot fixe 48 visible sur la figure 6 et d'axe AX2 parallèle à l'axe AX, et une seconde extrémité 49 située au voisinage de la seconde extrémité 42 de l'âme 38 et comportant une attache de câble 50 visible sur les figures 4 et 6.

Le levier 46 est délimité par un bord radialement externe 51 et un bord radialement interne 52 par rapport à l'axe AX, qui forment conjointement son contour. Comme visible sur les figures 2 et 5, lorsque le levier 46 est en place dans le frein 26, contre l'âme 38, son bord interne 52 dépasse vers l'intérieur par rapport au bord interne 53 de l'âme 38, c'est-à-dire qu'il est plus proche de l'axe AX sur la grande majorité de sa longueur.

Le bord interne 52 du levier 46 dépasse du bord 53 en particulier au niveau une portion de poussée 54 formant poussoir, et par laquelle ce bord 52 est en contact avec la première extrémité 44 de la biellette 43. Comme visible plus clairement sur les figures 4 et 6, ce levier 46 comporte un soyage S dans la région de la portion de poussée 54 de son bord interne 52 pour assurer que cette portion de poussée 54 est située dans le plan médian PM du frein, c'est-à-dire au même niveau que l'âme 38 par rapport au corps du plateau 27. Autrement dit, la portion de contact 54 est située à même distance du fond du plateau 27 que l'âme 38.

Autrement dit, grâce au soyage S, qui est situé à faible distance de la première extrémité 47, la portion de poussée 54 du levier 46 est déportée pour être située dans le plan PM de l'âme 38, de sorte que l'appui du levier 46 sur la première extrémité 44 de la biellette 43 est situé à mi-hauteur du premier segment pour éviter son basculement. Le levier 46 a ainsi une forme générale plane en ayant sa portion de contact 54 située hors de son plan principal.

Ainsi, lorsque le frein de parc est actionné, le câble tire l'attache 50 du levier 46 qui s'écarte alors de la semelle 39, ce levier 46 exerce alors des efforts sur la biellette 43 pour écarter le premier et le second segment 28, 29 mais en appliquant à ceux-ci des efforts situés et orientés dans le plan médian PM.

Le point d'application des efforts exercés par le levier 46 sur la biellette 43 étant situé dans le plan médian PM, il ne tend pas à faire basculer le premier segment 28, permettant ainsi d'accroître le niveau d'effort de freinage admissible par le frein.

Le levier 46 est fabriqué à partir d'une tôle épaisse ayant ici la même épaisseur que celle de l'âme 38, qui est découpée pour délimiter son contour, puis emboutie pour former le soyage S, avant de replier son extrémité 49 pour y former l'attache 50.

L'épaisseur de la tôle du levier 46 étant ici la même que celle de l'âme 38, le soyage S est formé avec une profondeur correspondant elle-même à l'épaisseur de cette tôle, de manière à déporter la portion de poussée 54 par rapport au corps de levier d'une valeur correspondant à cette épaisseur, comme illustré sur la figure 4.

Comme visible sur les figures, l'attache de tête de câble 50 est formée en repliant l'extrémité 49 en direction opposée du soyage 54 par rapport au corps du levier 46, de sorte que l'implantation de l'arrivée du câble dans le fond du plateau 27 n'a pas à être modifiée par rapport à un plateau de l'état de la technique. Autrement dit, grâce à l'invention, bien que l'attache 50 soit située entre l'âme 38 et le fond du plateau 27, c'est-à-dire décalée par rapport au plan PM, la poussée de la portion de poussée 54 sur la biellette 43 s'étend dans le plan médian PM pour éviter le basculement du segment 28.

Par ailleurs, un trou traversant 56 visible sur la figure 3 est percé à travers la première extrémité 47 de ce levier 46 pour permettre son articulation sur la première extrémité 41 de l'âme 38. Comme visible sur les figures 5 et 6, l'extrémité 47 du levier 46 est fixée à l'extrémité 41 de l'âme 38 par une vis 57 traversant conjointement le trou 56 et un trou correspondant formé dans l'extrémité 41. Un écrou ou agrafe circulaire 58 de type circlip enserre l'extrémité de cette vis 57 pour la bloquer en position de manière à former avec celle-ci la liaison pivot 48 grâce à laquelle le levier 46 est apte à pivoter autour de l'axe AX2 par rapport au segment 26.

Lorsque le levier 46 est inactif, son bord externe 51 vient en appui sur la semelle 39, mais sa portion de poussée 54 dépasse encore de l'âme 38, de sorte que c'est principalement par l'intermédiaire du levier 46 que le segment 28 est en appui contre la première extrémité 44 de la biellette 43, y compris lorsque ce levier est inactif. Ceci contribue à simplifier la forme et à réduire les dimensions de la première extrémité 44 de la biellette 43 sur laquelle le segment 28 est en appui.

D'une manière générale, l'invention permet d'augmenter le niveau d'effort de frein de parc admissible par le frein sans devoir redimensionner l'ensemble du frein, ce qui permet d'étendre les possibilités d'utilisation d'un frein de dimensions données sans accroître significativement son coût de fabrication.

**Nomenclature :**

| | | | | | |
|---|---|---|---|---|---|
| 1 | frein | 26 | frein | 46 | levier |
| 2 | plateau | 27 | plateau | 47 | extrémité |
| 3 | premier segment | 28 | premier segment | 48 | liaison pivot |
| 3 | second segment | 29 | second segment | 49 | extrémité |
| 6 | cylindre de roue | 31 | cylindre de roue | 50 | attache de câble |
| 7 | butée | 32 | butée | 51 | bord externe |
| 8 | ressort de rappel | 33 | ressort | 52 | bord interne |
| 9 | ressort de rappel | 34 | ressort | 53 | bord interne |
| 10 | ressort | 36 | ressort | 54 | portion de poussée |
| 12 | âme | 37 | ressort | 54 | soyage |
| 13 | semelle | 38 | âme | 56 | trou |
| 14 | garniture de freinage | 39 | semelle | 57 | vis |
| 15 | première extrémité | 40 | garniture | 58 | écrou |
| 16 | seconde extrémité | 41 | extrémité | | |
| 17 | biellette | 42 | seconde extrémité | | |
| 18 | extrémité | 43 | biellette | | |
| 19 | autre extrémité | 44 | première extrémité | | |
| 21 | levier | 45 | seconde extrémité | | |
| 22 | liaison pivot | | | | |
| 23 | attache | | | | |

## Revendications

1. Frein à tambour (26) comprenant un cylindre de roue (31) et une butée (32) portant conjointement un premier et un second segment (28, 29) ayant chacun une âme (38) comportant chacun une première et une seconde extrémité (41, 42) en appui respectivement sur le cylindre de roue (31) et sur la butée (32), ces âmes (38) s'étendant selon un même plan médian (PM), le premier segment (28) portant un levier (46) de frein de parc s'étendant le long de son âme (38) et comprenant une première extrémité (47) liée en rotation à la première extrémité (41) de cette âme (38) ainsi qu'une seconde extrémité (49) pourvue d'une attache d'actionnement (50), une biellette (43) s'étendant entre le premier et le second segment (28, 29), le levier (46) étant en appui sur une première extrémité (44) de cette biellette (43), cette biellette comprenant une seconde extrémité (45) en appui sur le second segment (29), **caractérisé en ce que** le levier (46) comporte une portion de poussée (54) sur la première extrémité (44) de la biellette (43) qui est déportée pour être située au niveau du plan médian (PM).

2. Frein selon la revendication 1, dans lequel le levier (46) est fabriqué en tôle découpée et emboutie et comporte un soyage (S) pour déporter sa portion de poussée (54).

3. Frein selon la revendication 1 ou 2, dans lequel la portion de poussée (54) dépasse de l'âme (38) y compris lorsque le levier (46) est inactif, pour que le premier segment (28) soit en appui sur la première extrémité (44) de la biellette (43) principalement par l'intermédiaire du levier (46) y compris lorsque ce levier (46) est inactif.

4. Frein selon l'une des revendications précédentes, dans lequel l'attache d'actionnement (50) est une attache de tête de câble (50) qui est décalée par rapport au plan médian (PM).

5. Frein selon la revendication 4, dans lequel le levier est fabriqué en tôle emboutie et dans lequel l'attache de tête de câble (50) est constituée par un repli de l'extrémité (49) du levier (46).

## Patentansprüche

1. Trommelbremse (26), die einen Radzylinder (31) und einen Anschlag (32) beinhaltet, die gemeinsam eine erste und eine zweite Backe (28, 29) tragen, die jeweils einen Steg (38) aufweisen, der jeweils ein erstes und ein zweites Ende (41, 42) aufweist, das jeweils auf dem Radzylinder (31) bzw. auf dem Anschlag (32) aufliegt, wobei sich diese Stege (38) gemäß einer gleichen Mittelebene (PM) erstrecken, wobei die erste Backe (28) einen Hebel (46) einer Feststellbremse trägt, der sich entlang ihres Stegs (38) erstreckt und ein erstes Ende (47), das drehbar mit dem ersten Ende (41) dieses Stegs (38) verbunden ist, sowie ein zweites Ende (49), das über ein Betätigungselement (50) verfügt, beinhaltet, wobei sich zwischen der ersten und der zweiten Backe (28, 29) ein Gestänge (43) erstreckt, wobei der Hebel (46) auf einem ersten Ende (44) dieses Gestänges (43) aufliegt, wobei dieses Gestänge ein zweites Ende (45) beinhaltet, das auf der zweiten Backe (29) aufliegt, **dadurch gekennzeichnet, dass** der Hebel (46) einen Abschnitt zum Drücken (54) gegen das erste Ende (44) des Gestänges (43) umfasst, der verlagert ist, um sich in der Mittelebene (PM) zu befinden.

2. Bremse nach Anspruch 1, wobei der Hebel (46) aus einem gestanzten Blechzuschnitt gefertigt ist und einen Kragen (S) umfasst, um seinen Drückabschnitt (54) zu verlagern.

3. Bremse nach Anspruch 1 oder 2, wobei der Drückabschnitt (54) über den Steg (38) hervorsteht, auch wenn der Hebel (46) inaktiv ist, damit sich die erste Backe (28) in erster Linie mittels des Hebels (46), auch wenn dieser Hebel (46) inaktiv ist, auf dem ersten Ende (44) des Gestänges (43) abstützt.

4. Bremse nach einem der vorhergehenden Ansprüche, wobei das Betätigungselement (50) ein Kabelkopfelement (50) ist, das mit Bezug auf die Mittelebene (PM) versetzt ist.

5. Bremse nach Anspruch 4, wobei der Hebel aus gestanztem Blech gefertigt ist und wobei das Kabelkopfelement (50) aus einer Umbiegung des Endes (49) des Hebels (46) besteht.

## Claims

1. A drum brake (26) including a wheel cylinder (31) and a stop (32) carrying together a first and a second segment (28, 29) each having a web (38) each including a first and a second end (41, 42) bearing against the wheel cylinder (31) and against the stop (32) respectively, these webs (38) extending along a same median plane (PM), the first segment (28) carrying a parking brake lever (46) extending along its web (38) and comprising a first end (47) rotatably connected to the first end (41) of this web (38) as well as a second end (49) provided with an actuation fastener (50), a connecting rod (43) extending between the first and the second segment (28, 29), the lever (46) bearing against a first end (44) of this connecting rod (43), this connecting rod comprising a second end (45) bearing against the second segment (29), **characterised in that** the lever (46) includes a thrust portion (54) on the first end (44) of the connecting rod (43) which is offset to be located at the median plane (PM).

2. The brake according to claim 1, wherein the lever (46) is manufactured from a cut and stamped metal plate and includes a dimple (S) to offset its thrust portion (54).

3. The brake according to claim 1 or 2, wherein the thrust portion (54) projects from the web (38) including when the lever (46) is inactive, such that the first segment (28) bears against the first end (44) of the connecting rod (43) mainly through the lever (46) including when this lever (46) is inactive.

4. The brake according to one of the preceding claims, wherein the actuation fastener (50) is a cable head fastener (50) which is shifted with respect to the median plane (PM).

5. The brake according to claim 4, wherein the lever is manufactured from a stamped metal plate and wherein the cable head fastener (50) consists of a fold of the end (49) of the lever (46).
